# EUROPEAN PATENT APPLICATION

(11) **EP 3 975 542 A1**
(43) Date of publication of application: **30.03.2022**
(21) Application number: 20809902.8
(22) Date of filing: 12.05.2020
(51) Int. Cl.: H04N 5/232, G06T 7/246

(54) **IMAGE PROCESSING DEVICE, IMAGE PROCESSING METHOD, AND PROGRAM**

(30) Priority: 21.05.2019 JP 2019095155
(71) Applicant: Sony Group Corporation, Tokyo 108-0075 (JP)
(72) Inventor: TAKATORI, Jiro, Tokyo 108-0075 (JP); NOGUCHI, Shohei, Tokyo 108-0075 (JP)
(74) Representative: D Young & Co LLP
(86) International application number: PCT/JP2020/019020
(87) International publication number: WO 2020/235401

(57) **Abstract**

Provided are a device and a method that execute movement prediction of a moving subject included in an input image from an imaging unit, generate a future prediction image, and display the image on a display unit. An image processing unit that executes movement prediction of a moving subject included in an input image from an imaging unit, generates a future prediction image, and displays the image on a display unit is provided. The future prediction image to be displayed is an image in which a delay time based on a delay factor that occurs between a subject photographing start preparation operation by a user and completion of image photographing is taken into consideration, and is, for example, a future prediction image ahead by a total delay time of a display delay for the display unit and a delay time between a shutter operation and image recording. Further, the image processing unit analyzes a state of the moving subject included in the input image, generates information for explaining the state and information for explaining the movement to be predicted, and displays the information on the display unit.

## Description

### [Technical Field]

The present disclosure relates to an image processing device, an image processing method, and a program. More specifically, the present disclosure relates to an image processing device, an image processing method, and a program that generate and display a future prediction image and guidance information such as an explanation of a predicted movement, on the basis of an image photographed by a camera.

### [Background Art]

In many general cameras a delay time exits between a shutter operation and image photographing. Thus, even if a shutter is operated in an attempt to photograph a picture of a moving subject at a particular moment, a picture obtained in delay by the delay time may be photographed.

Further, while many recent cameras and smartphones having a camera function perform photographing while viewing an image (LV image (through image)) displayed on a display unit, a predetermined period of time is also required for image display processing on the display unit, and the display image is a slightly delayed image. Thus, even if a user tries to photograph an image at a particular moment while viewing a monitor screen, an image of a slightly delayed time that is different from the image viewed on the monitor screen may be photographed.

Specifically, for example, even if an image of the moment when a bird flaps is confirmed on the display unit and the shutter operation is performed in an attempt to photograph the moment when the bird flaps, the photographed image may become an image after the bird has flown off.

In order to certainly photograph an image of the moment when the bird flaps, it is necessary to operate the shutter immediately before the bird flaps, by sensing the movement of the bird.

Although a professional photographer may be capable of performing photographing of operating the shutter immediately before the bird flaps by taking into consideration the delay time and sensing the movement of the bird, such advanced photographing is difficult for many general users.

When consecutive photographing is performed in a consecutive shooting mode, images at predetermined intervals can be photographed, but the consecutive shooting mode generally has a photographing interval of, for example, 20 f/s, that is, approximately 20 frames per second, and whether or not the image at the desired timing is included in the photographed images taken at the intervals remains unclear until the photographed images are checked.

Although it is possible to perform high-speed consecutive shooting or moving image photographing, there is a problem that the image quality becomes poorer than that of a still image with high image quality.

As described above, when a general user performs the shutter operation by confirming the image displayed on the display unit of the camera or the smartphone, there is a problem that it becomes difficult to photograph an image at a particular moment expected by the user.

In order to solve this problem, it is effective to inform the user of a future state rather than the present state.

It should be noted that, as a prior art that discloses processing of predicting a future state and displaying a prediction image on a display unit, there is, for example, PTL 1 (Japanese Patent Laid-open No. 2000-322556) .

This literature discloses a processing example of generating and displaying future weather images to be predicted such as the movement of rain clouds.

However, the future prediction image generated by the processing disclosed in the abovementioned PTL is a future prediction image several minutes to several hours later, and does not enable processing of teaching a shutter operation timing to a user as a camera photographer.

### [Citation List]

### [Patent Literature]

[PTL 1]
Japanese Patent Laid-open No. 2000-322556

### [Summary]

### [Technical Problem]

The present disclosure has been made in view of, for example, the above-described problem, and provides an image processing device, an image processing method, and a program that enable a photographer (user) to photograph a picture at an appropriate timing by displaying a future prediction image and guidance information such as an explanation of a predicted movement, on a display unit of a camera or a smartphone.

### [Solution to Problem]

According to a first aspect of the present disclosure, provided is an image processing device including an image processing unit that executes movement prediction of a moving subject included in an input image from an imaging unit, generates a future prediction image, and displays the image on a display unit.

Further, according to a second aspect of the present disclosure, provided is an image processing method executed in an image processing device, in which an image processing unit executes movement prediction of a moving subject included in an input image from an imaging unit, generates a future prediction image, and displays the image on a display unit.

Further, according to a third aspect of the present disclosure, provided is a program that causes an image processing unit in an image processing device to execute image processing of executing movement prediction of a moving subject included in an input image from an imaging unit, generating a future prediction image, and displaying the image on a display unit.

It should be noted that the program of the present disclosure is, for example, a program that can be provided to an image processing device or a computer system capable of executing various program codes, by a storage medium or a communication medium provided in a computer-readable form. By providing such a program in a computer-readable form, processing in accordance with the program is realized on the image processing device or the computer system.

Still other objects, features, and advantages of the present disclosure will become apparent from a more detailed description based on an embodiment of the present disclosure to be described later and the accompanying drawings. It should be noted that the system in the present specification is a logical assembly configuration of a plurality of devices, and is not limited to a system in which the devices of each configuration are provided in the same housing.

According to a configuration of an embodiment of the present disclosure, according to a configuration of an embodiment of the present disclosure, a device and a method that execute movement prediction of a moving subject included in an input image from an imaging unit, generate a future prediction image, and display the image on a display unit are realized.

Specifically, for example, an image processing unit that executes movement prediction of a moving subject included in an input image from an imaging unit, generates a future prediction image, and displays the image on a display unit is provided. The future prediction image to be displayed is an image in which a delay time based on a delay factor that occurs between a subject photographing start preparation operation by a user and completion of image photographing is taken into consideration, and is, for example, a future prediction image ahead by a total delay time of a display delay for the display unit and a delay time between a shutter operation and image recording. Further, the image processing unit analyzes the state of the moving subject included in the input image, generates information for explaining the state and information for explaining the movement to be predicted, and displays the information on the display unit.

With the configuration, the device and the method that execute movement prediction of the moving subject included in the input image from the imaging unit, generate the future prediction image, and display the image on the display unit are realized.

It should be noted that the effects described in the specification are merely illustrative and not limited, and additional effects may be provided.

### [Brief Description of Drawings]

[FIG. 1]

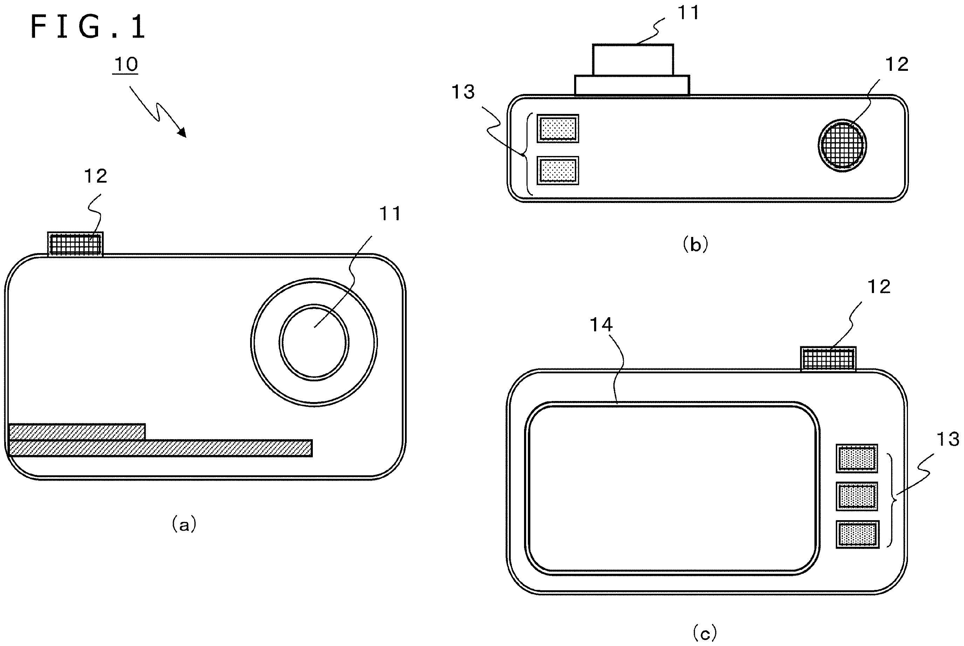

   FIG. 1 depicts diagrams each describing a configuration example of an imaging device as an example of an image processing device of the present disclosure.
[FIG. 2]

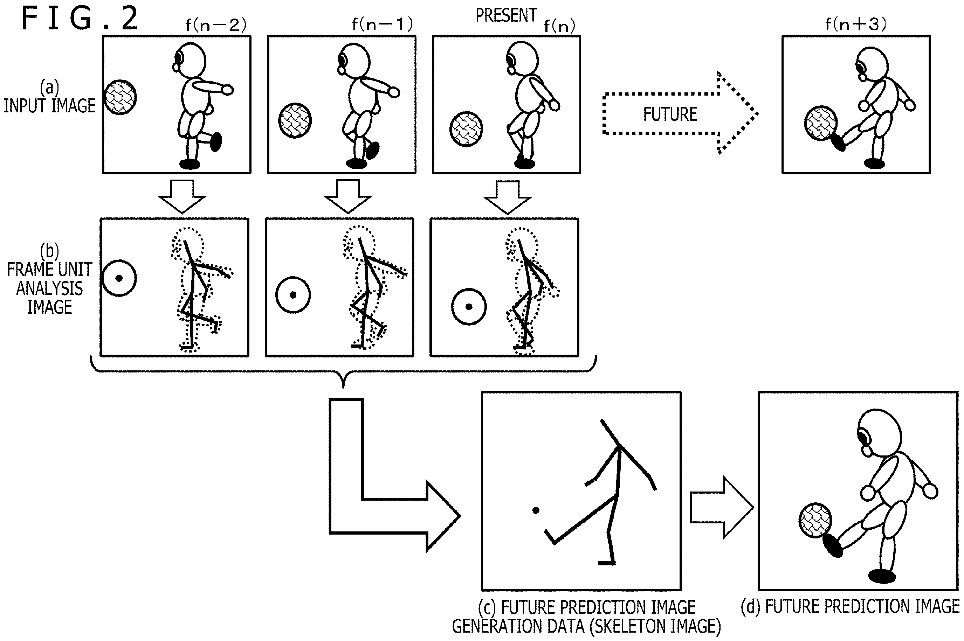

   FIG. 2 depicts diagrams each describing an example of processing executed by the image processing device of the present disclosure.
[FIG. 3]

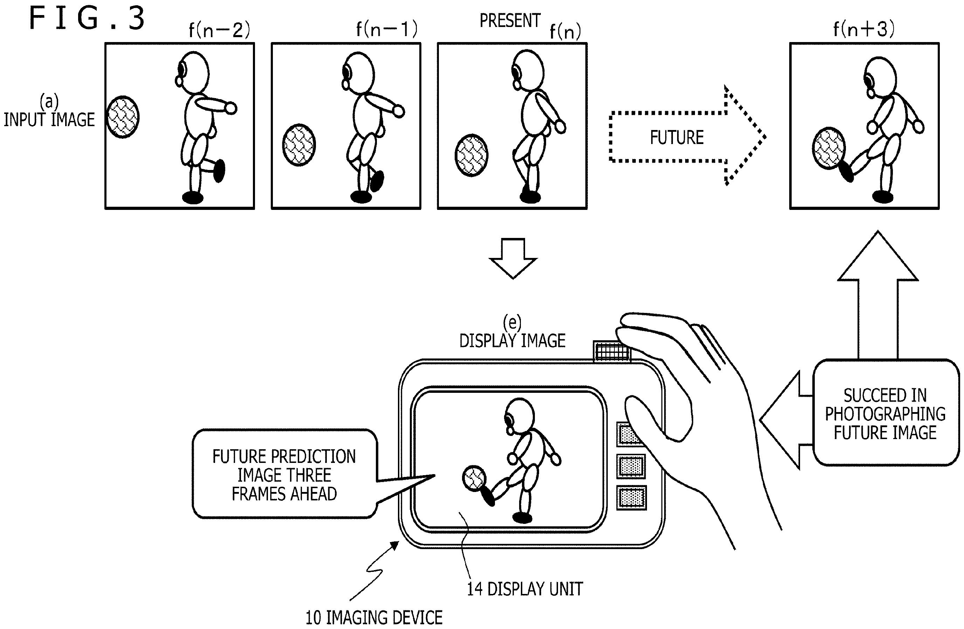

   FIG. 3 depicts diagrams each describing an example of processing executed by the image processing device of the present disclosure.
[FIG. 4]

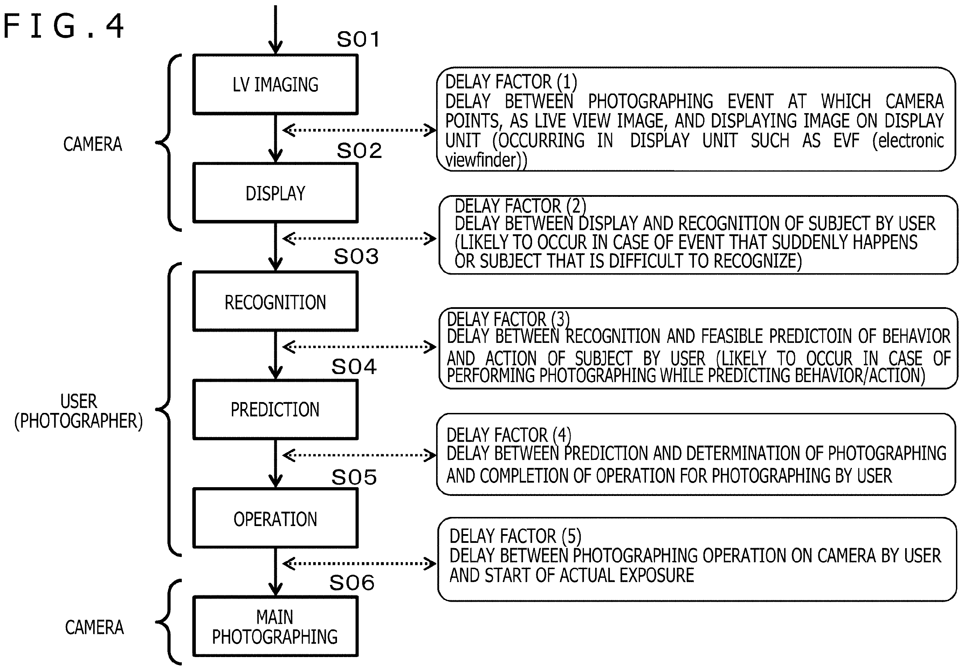

   FIG. 4 is a diagram for describing a sequence from the time a user (photographer) points the imaging device at a subject to the time actual image photographing (main photographing) is performed and delay factors occurring during the sequence.
[FIG. 5]

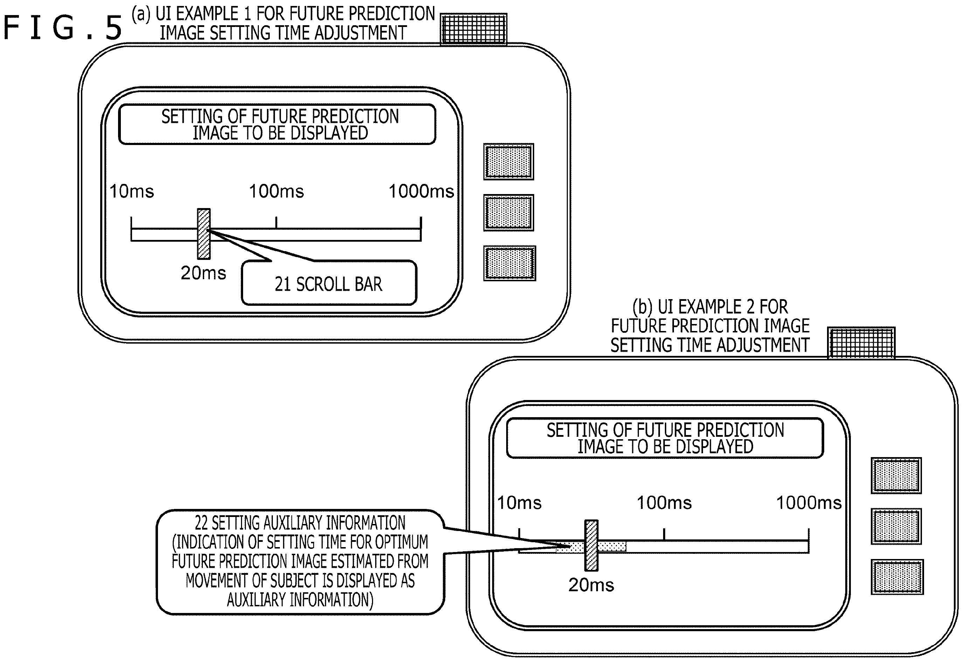

   FIG. 5 depicts diagrams each describing an example of a UI of the image processing device of the present disclosure.
[FIG. 6]

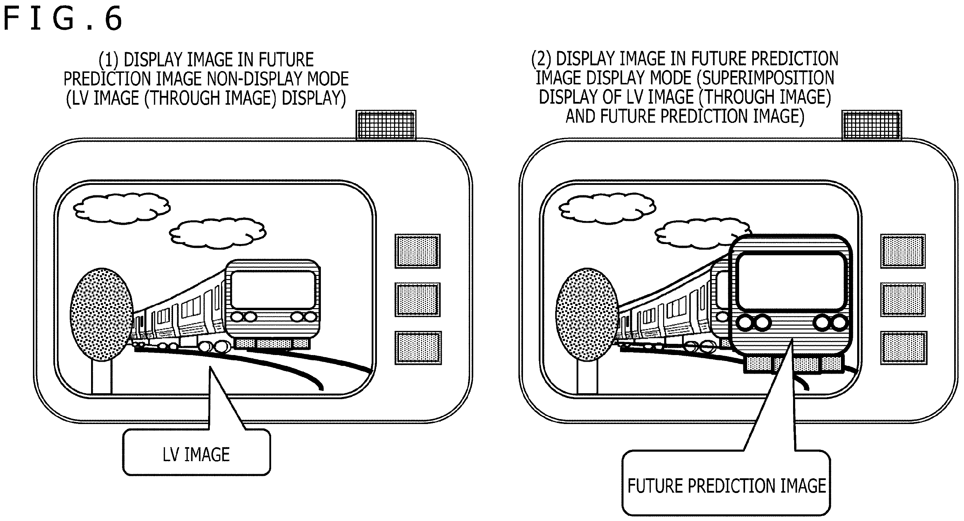

   FIG. 6 depicts diagrams each describing an example of processing executed by the image processing device of the present disclosure.
[FIG. 7]

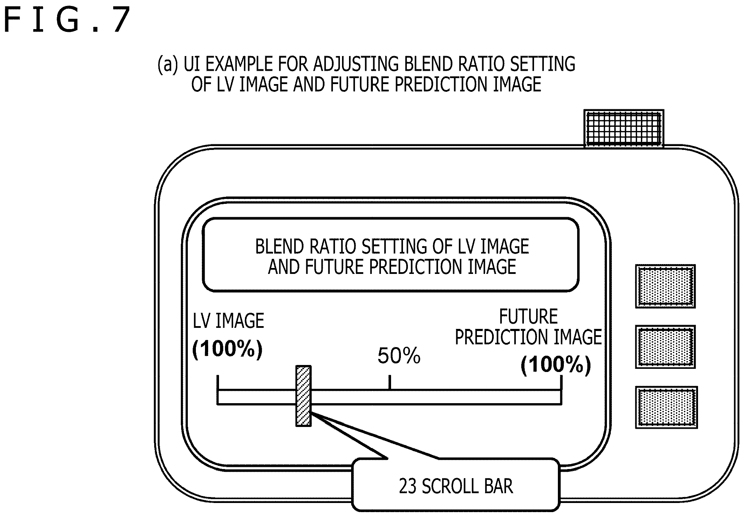

   FIG. 7 is a diagram for describing an example of a UI of the image processing device of the present disclosure.
[FIG. 8]

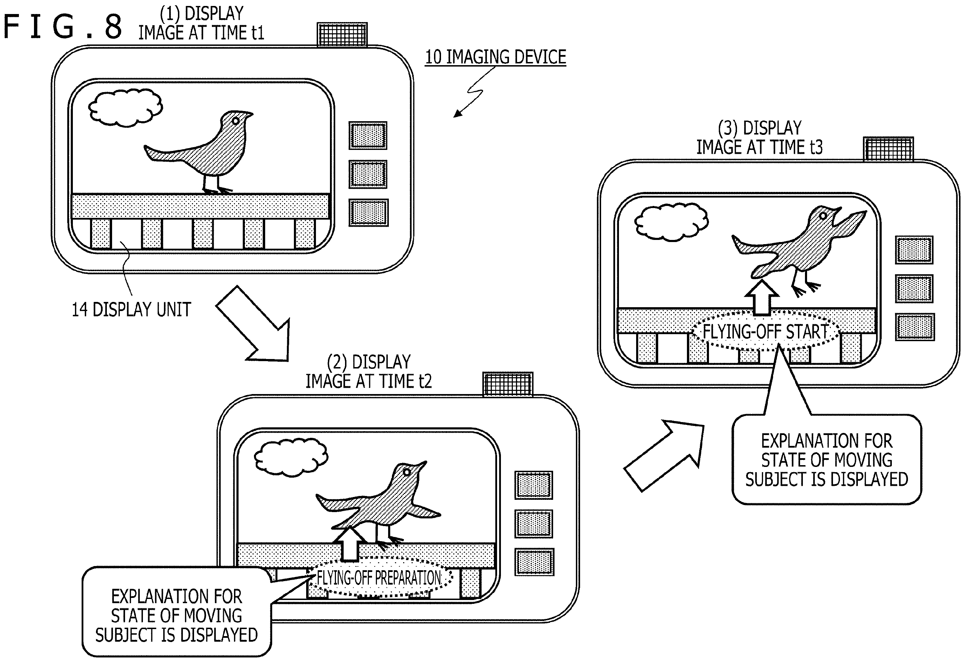

   FIG. 8 depicts diagrams each describing an example of processing executed by the image processing device of the present disclosure.
[FIG. 9]

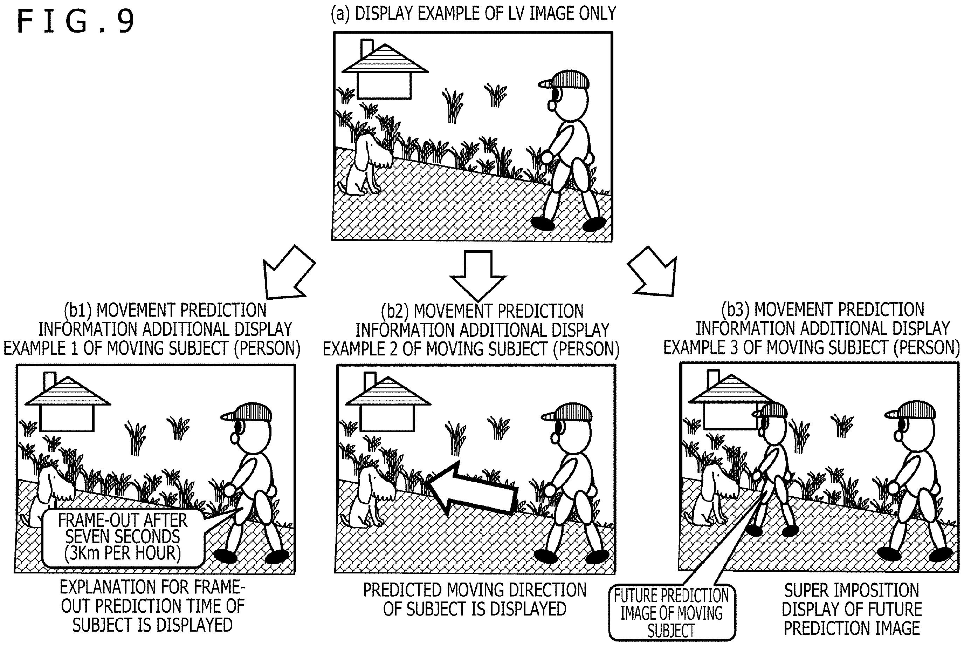

   FIG. 9 depicts diagrams each describing an example of processing executed by the image processing device of the present disclosure.
[FIG. 10]

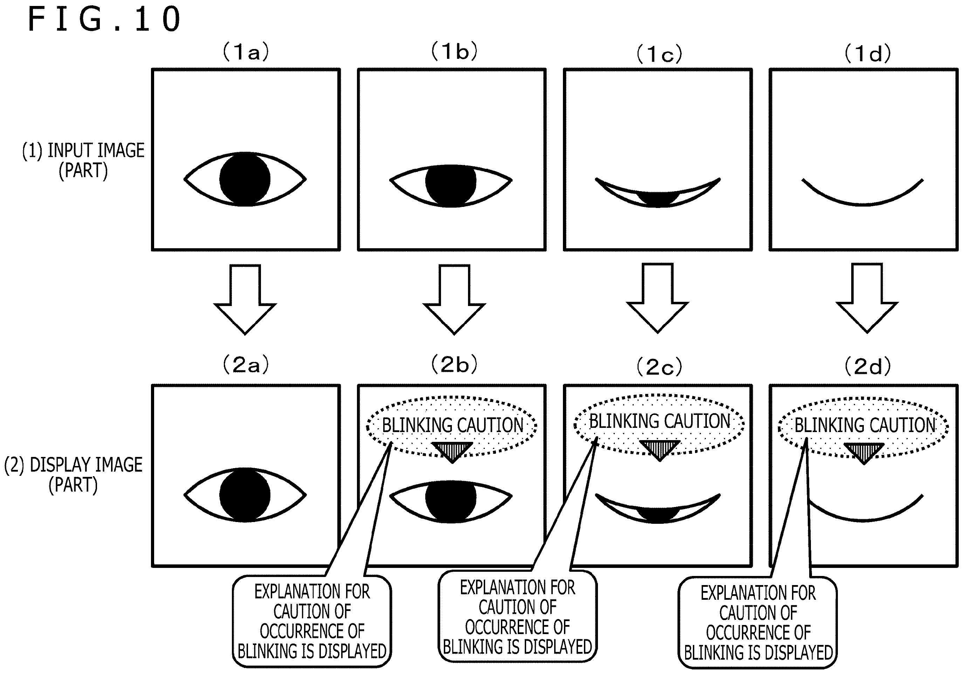

   FIG. 10 depicts diagrams each describing an example of processing executed by the image processing device of the present disclosure.
[FIG. 11]

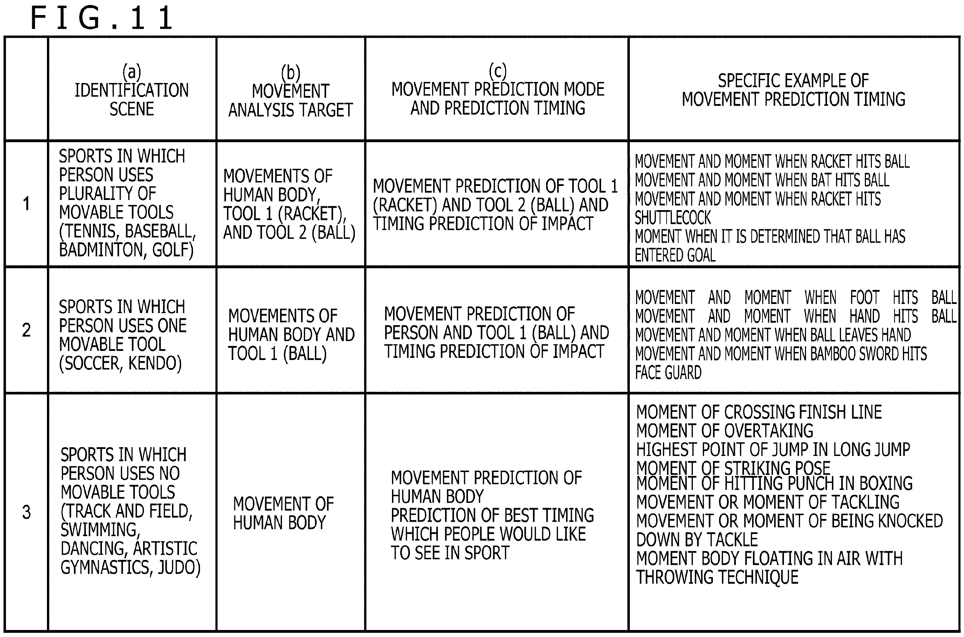

   FIG. 11 is a diagram for describing specific examples of processing executed by the image processing device of the present disclosure.
[FIG. 12]

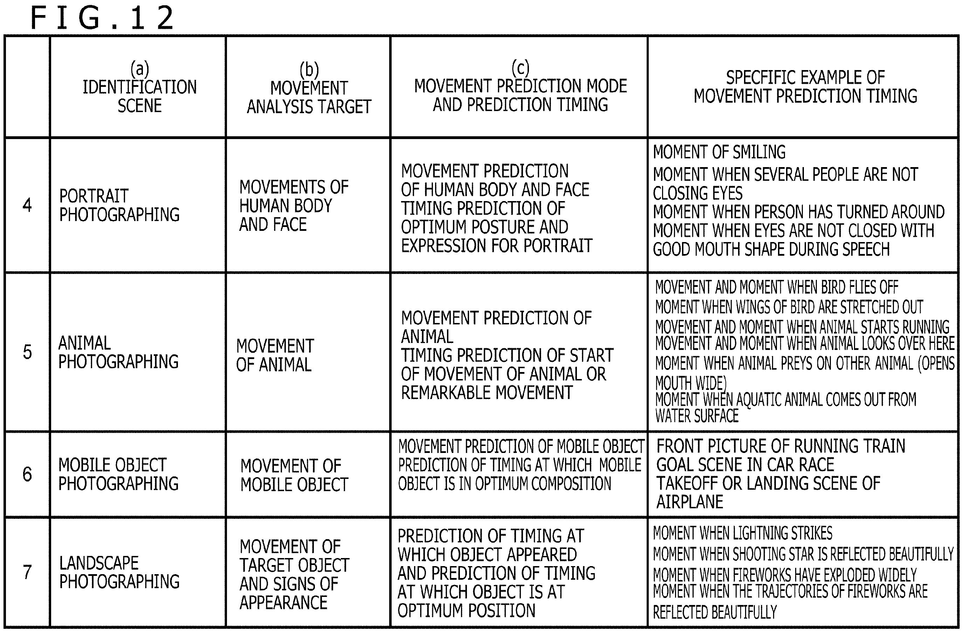

   FIG. 12 is a diagram for describing specific examples of processing executed by the image processing device of the present disclosure.
[FIG. 13]

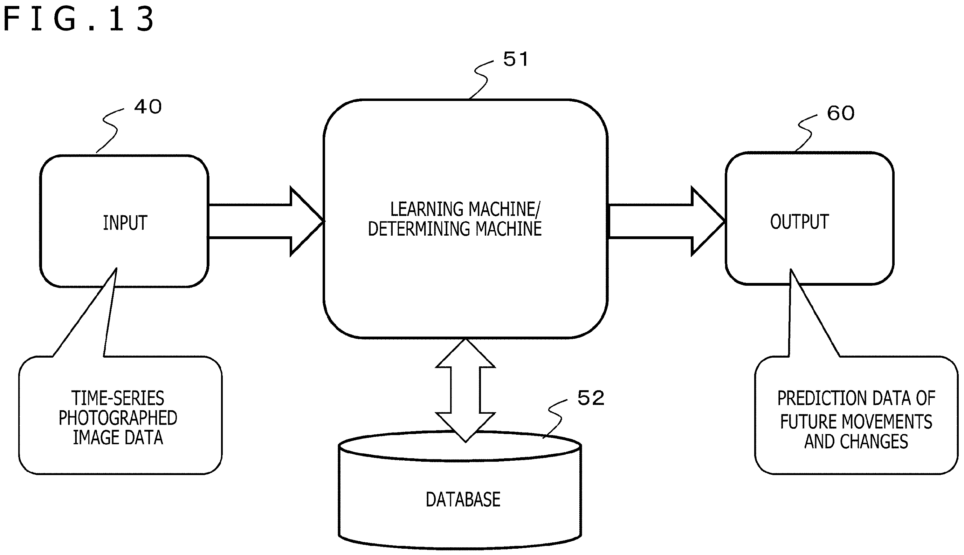

   FIG. 13 is a diagram for describing a configuration example for execution of learning processing and determination processing (prediction processing) performed by the image processing device of the present disclosure.
[FIG. 14]

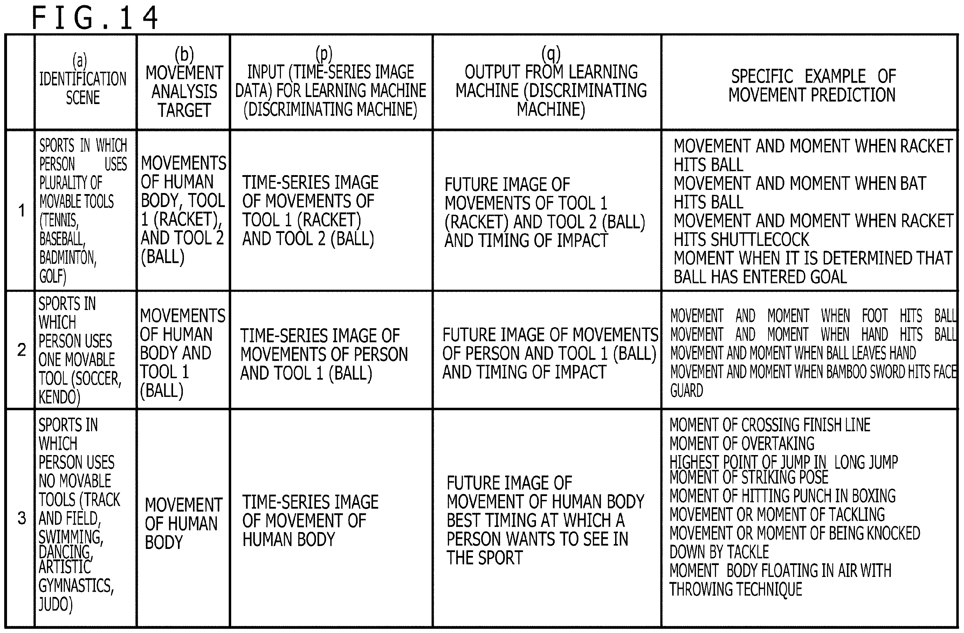

   FIG. 14 is a diagram for describing specific examples of the learning processing and the determination processing (prediction processing) executed by the image processing device of the present disclosure.
[FIG. 15]

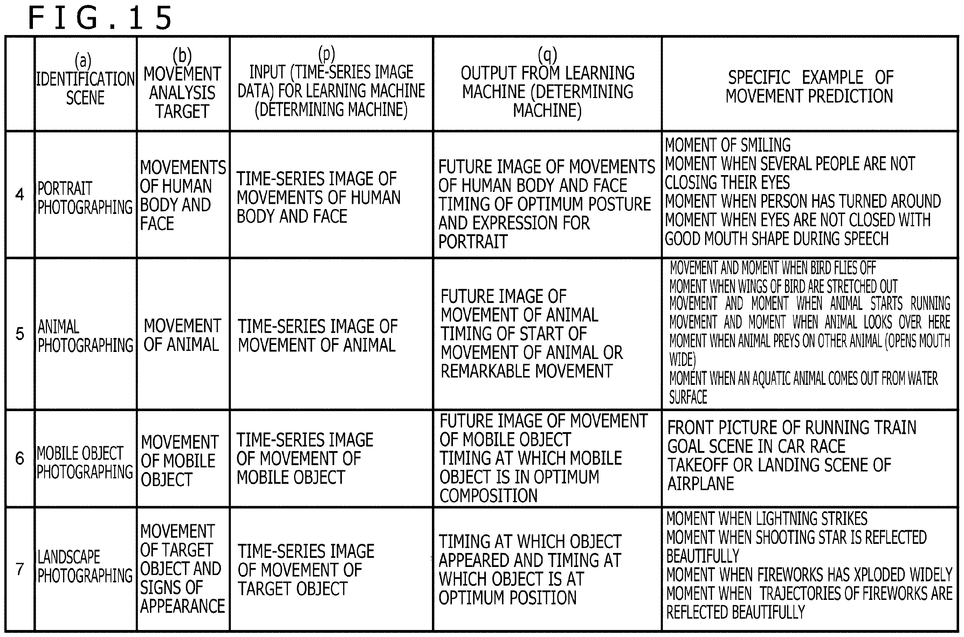

   FIG. 15 is a diagram for describing specific examples of the learning processing and the determination processing (prediction processing) executed by the image processing device of the present disclosure.
[FIG. 16]

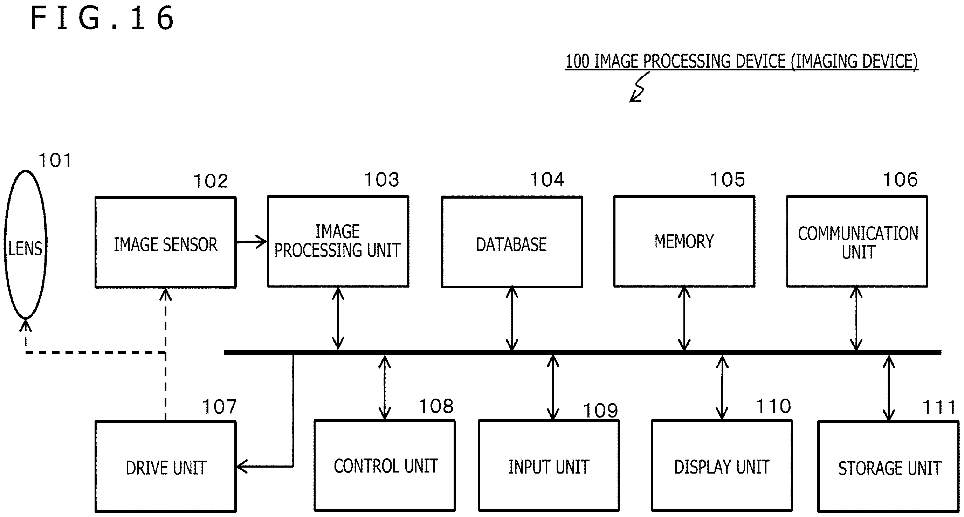

   FIG. 16 is a diagram for describing a configuration example of the image processing device of the present disclosure.
[FIG. 17]

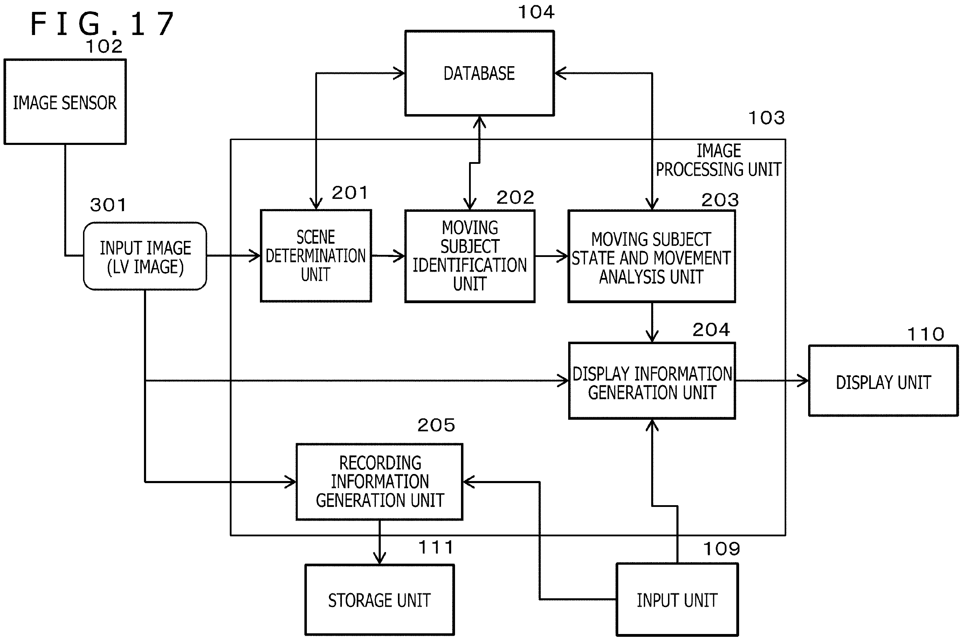

   FIG. 17 is a diagram for describing an example of a configuration and processing of an image processing unit of the image processing device of the present disclosure.
[FIG. 18]

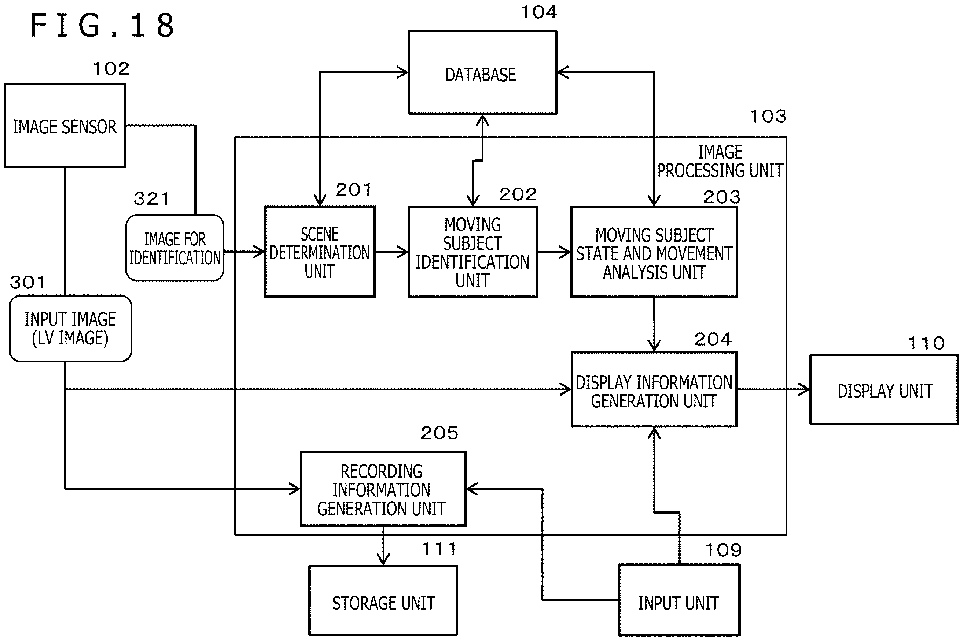

   FIG. 18 is a diagram for describing an example of a configuration and processing of the image processing unit of the image processing device of the present disclosure.

### [Description of Embodiment]

Hereinafter, an image processing device, an image processing method, and a program of the present disclosure will be described in detail with reference to the drawings. It should be noted that the description will be made based on the following items.
1. Regarding exterior configuration example of image processing device of present disclosure
2. Regarding specific example of processing executed by image processing device of present disclosure
   2-(1) Regarding specific example of processing for displaying future prediction image on display unit
   2-(2) Regarding specific example of processing for displaying explanation or prediction information of movement of subject, on display unit
3. Regarding specific example of analysis processing referring to database executed by image processing unit of image processing device of present disclosure
4. Regarding learning processing executed as generation processing of data to be stored in database and usage processing of learning result
5. Regarding configuration example of image processing device of present disclosure
6. Summary of configuration of present disclosure

### [1. Regarding exterior configuration example of image processing device of present disclosure]

First, an exterior configuration example of the image processing device of the present disclosure will be described.

It should be noted that an example in which an imaging device (camera) is used as an example of the image processing device of the present disclosure will be described in the following. However, the configuration and processing of the present disclosure can be applied in not only an imaging device but also a device having a camera function and a display unit such as a smartphone or a tablet terminal.

In addition, the configuration and processing of the present disclosure can also be used in a device for receiving and processing a photographed image of an imaging device in a remote device for executing communication with the imaging device. The image processing device of the present disclosure includes these various devices.

FIG. 1 depicts diagrams each illustrating a configuration example of an imaging device 10 as an example of the image processing device of the present disclosure. The imaging device 10 has a lens 11, a shutter 12, various operation units 13 and 15, and a display unit (monitor unit) 14.

The display unit 14 displays a present subject image as an LV image (live view image (through image)) irrespective of an operation of the shutter 12.

In a case where an image is to be photographed, for example, a user views the image displayed on the display unit 14 of the imaging device 10 and presses the shutter 12 at a predetermined timing.

However, as described above, the imaging device 10 cannot acquire a photographed image at a timing completely equal to the timing of operation of the shutter 12, and a delay time exists between the shutter operation timing and the image photographing timing. Thus, in a case where a picture of a fast-moving subject is photographed, it is necessary to operate the shutter in consideration of the delay time.

In addition, the display image of the display unit 14 is also an image in which a delay has occurred, and the shutter operation taking into consideration the delay time is required even in the case of performing photographing while viewing the monitor screen.

Such photographing processing is difficult for general users.

The image processing device of the present disclosure, for example, the imaging device 10 illustrated in FIG. 1, displays a future prediction image and guidance information such as an explanation of a movement to be predicted, on the display unit 14.

Hereinafter, specific examples of processing executed by the imaging device 10 of the present disclosure will be described with reference to FIG. 2 and the drawings that follow.

### [2. Regarding specific example of processing executed by image processing device of present disclosure]

Next, specific examples of processing executed by the image processing device of the present disclosure will be described with reference to FIG. 2 and the drawings that follow.

As described above, the image processing device of the present disclosure, for example, the imaging device 10 illustrated in FIG. 1, displays a future prediction image and guidance information such as an explanation of a movement to be predicted, on the display unit 14. Hereinafter, specific examples of the following two kinds of processing will sequentially be described.
(1) Specific example of processing for displaying future prediction image on display unit
(2) Specific example of processing for displaying explanation or prediction information of movement of subject, on display unit

### [2-(1) Regarding specific example of processing for displaying future prediction image on display unit]

First, a specific example of processing for displaying a future prediction image on the display unit will be described.

With reference to FIG. 2, an example of processing executed by an image processing unit of the imaging device 10 of the present disclosure, that is, a specific example of processing for displaying a future prediction image on the display unit 14 of the imaging device 10, will be described.
(a) input images illustrated in FIG. 2 are images input to the image processing unit of the imaging device 10. That is, the images are images input via an imaging element of the imaging device 10. The images are normally displayed as LV images (through images) on the display unit 14 of the imaging device 10.

The image processing unit of the imaging device 10 of the present disclosure generates a future prediction image on the basis of these input images, and executes processing for displaying the images on the display unit 14.

FIG. 2 illustrates, as the (a) input images, three consecutive photographed frames of a frame f(n-2), a frame f(n-1), and a frame f(n).

These are not images photographed and recorded by the shutter operation performed by the user, but images input as LV images (through images) not to be recorded.

It is assumed that the present is the input timing of the frame f(n) .

The image processing unit of the imaging device 10 of the present disclosure detects a subject that moves, that is, a "moving subject," in each image frame every time each input image frame is input, and performs movement analysis of the detected moving subject.

Specifically, skeleton (frame) analysis and center of gravity analysis are performed.

The analysis results are frame unit analysis images illustrated in FIG. 2(b).

As illustrated in FIG. 2(b), the image processing unit analyzes the skeleton (frame) and the position of the center of gravity of the moving subject included in each image frame.

Further, the image processing unit analyzes the amount and direction of the movement and change of the skeleton and the center of gravity between the frames by using a plurality of frame unit analysis images illustrated in FIG. 2(b), and estimates the state of the "moving subject," that is, the position and posture of the "moving subject," that are obtained after elapse of a predetermined period of time.

An example of the result of the analysis processing (estimation processing) is illustrated in FIG. 2(c), that is, (c) future prediction image generation data (skeleton image (frame image)).

The (c) future prediction image generation data (skeleton image (frame image)) is data indicating the structure and the position of the center of gravity of the skeleton (frame) of the moving subject in the photographed image.

Finally, the image processing unit pastes the image of the moving subject obtained from the input images, for example, the images of the frames f(n-2) to f(n), to the "(c) future prediction image generation data (skeleton image (frame image))," and generates a future prediction image.

The image is a (d) future prediction image illustrated in FIG. 2.

The (d) future prediction image illustrated in FIG. 2 corresponds to an image three frames ahead (f(n+3)) of the present (at the time of inputting the frame f(n)).

The image processing unit displays the future prediction image on the display unit 14 of the imaging device 10.

FIG. 3 illustrates a display example of the future prediction image on the display unit 14 of the imaging device 10.

Normally, the present photographed image (LV image) is displayed on the display unit 14 of the imaging device 10. However, with a display mode set to a future prediction image display mode for displaying the future prediction image, the display unit 14 can display the future prediction image instead of the present photographed image (LV image).

In the case where the future prediction image display mode is set, as illustrated in FIG. 3, the display unit 14 of the imaging device 10 can display the future prediction image (frame f(n+3) three frames ahead instead of the present photographed image (frame f(n)).

The user checks the future prediction image displayed on the display unit 14 and operates the shutter, thereby succeeding in photographing an image corresponding to the future prediction image displayed on the display unit 14, that is, not the present input image frame f(n) but the future input image frame f(n+3).

It should be noted that, in consideration of a display delay time for the display unit and a processing delay time between the shutter operation and the image photographing processing, the future prediction image to be displayed on the display unit 14 is, for example, a future prediction image of a time that is ahead for a length of time corresponding to the total delay time.

The image processing unit generates the future prediction image with such a setting and displays the same on the display unit 14.

With this setting, the user can check the future prediction image displayed on the display unit 14 and operate the shutter, so that the same image as the future prediction image displayed on the display unit 14 can be photographed and recorded.

It should be noted that the future prediction image to be displayed on the display unit 14 can be variously set other than being set to the future prediction image of a time that is ahead for a length of time corresponding to the total delay time that occurs between the shutter operation and the image photographing processing as described above.

FIG. 4 illustrates a diagram for describing delay factors occurring when the user (photographer) photographs an image with use of the imaging device 10.

FIG. 4 is a diagram for describing a sequence from the time the user (photographer) points the imaging device 10 at a subject to the time actual image photographing (main photographing) is performed and delay factors occurring during the sequence.

In Step S01, a photographed image (LV image) is captured in the imaging device 10 by pointing the imaging device 10 at a subject.

In Step S02, the photographed image (LV image) is displayed on the display unit 14.

In Step S03, the user (photographer) recognizes the photographed image (LV image) displayed on the display unit 14.

In Step S04, the user (photographer) views the photographed image (LV image) and predicts the photographing timing.

In Step S05, the user (photographer) performs a photographing operation.

In Step S06, image photographing according to the photographing operation by the user (photographer) is executed.

Basically, the processing is executed in the order of Steps S01 to S06.

As delay factors that possibly occur during these processing sequences, there are delay factors (1) to (5) illustrated on the right side of FIG. 4. That is, the delay factors are as follows.

Delay factor (1): a delay between photographing the scene at which the camera points, as a photographed image (LV image), and displaying the image on the display unit (occurring in the display unit such as an EVF (electronic viewfinder))

Delay factor (2): a delay between display and recognition of the subject by the user (likely to occur in the case of an event that suddenly happens or a subject that is difficult to recognize)

Delay factor (3): a delay between the recognition and feasible prediction of the behavior and action of the subject by the user (likely to occur in the case of performing photographing while predicting behavior/action)

Delay factor (4): a delay between the prediction and determination of photographing and completion of operation for photographing by the user

Delay factor (5): a delay between the performance of the photographing operation on the camera by the user and the start of actual exposure

For example, there are these delay factors.

These delay factors cause the image that the user intends to photograph to be different from the actual photographed image.

For example, the future prediction image generated by the image processing unit of the imaging device that is the image processing device of the present disclosure is a future prediction image in which a delay time based on the various delay factors described above that occur between a subject photographing start preparation operation for the imaging device by the user and completion of the image photographing is taken into consideration. In consideration of these various delay factors, the image processing device of the present disclosure performs processing to match the image that the user intends to photograph with the actual photographed image.

It should be noted that the user can set the length of time the image to be used as the future prediction image to be displayed on the display unit 14 is to be ahead for. This setting is made in consideration of a difference in shutter operation speed between users, the preferences of users, and the like.

Examples of UIs (user interfaces) for this setting are illustrated in FIG. 5.

FIG. 5 illustrates the following two UI examples.
(a) UI example 1 for future prediction image setting time adjustment
(b) UI example 2 for future prediction image setting time adjustment

The (a) UI example 1 for future prediction image setting time adjustment is an example of a basic UI. The user can set, between 10 and 1,000 ms, the length of time the future prediction image to be displayed on the display unit 14 is to be ahead for.

By sliding a scroll bar 21 illustrated in the drawing to the left or right, it is possible to optionally set the future prediction image to be displayed on the display unit 14 in a range from an image 10 ms ahead to an image 1000 ms ahead.

The image processing unit of the imaging device 10 executes the processing described above with reference to FIG. 1 and FIG. 2, on the basis of the user setting information, generates the future prediction image according to the setting time set by the user, and displays the future prediction image on the display unit 14.

The (b) UI example 2 for future prediction image setting time adjustment is an example of a UI in which setting auxiliary information 22 is additionally displayed.

The setting auxiliary information 22 is auxiliary information as an indication of the setting time for the optimum future prediction image estimated from the movement of the subject. The setting auxiliary information 22 is a time in a range calculated by analyzing the movement of the subject in the image processing unit of the imaging device 10.

The display example of the future prediction image described with reference to FIG. 3 is an example in which only the future prediction image is displayed without displaying the LV image on the display unit 14, but the display mode of the future prediction image on the display unit 14 is not limited to such a display example.

Another display example of the future prediction image will be described with reference to FIG. 6.

The examples illustrated in FIG. 6 are examples in which the LV image and the future prediction image are superimposed and displayed on the display unit 14.

FIG. 6 illustrates image display examples in the following two display modes as the image display examples on the display unit 14.
(1) Display image example in future prediction image non-display mode (LV image (through image) display)
(2) Display image example in future prediction image display mode (superimposition display and blend display of LV image (through image) and future prediction image)

The display image illustrated in FIG. 6(1) is an example in which only the LV image is displayed as similar to the prior art. In the case where the "future prediction image non-display mode" is set, the display unit 14 displays the present photographed image, that is, the LV image input, from the imaging element, as in the prior art.

On the other hand, the display image illustrated in FIG. 6(2) is an example of a display image displayed by superimposing or blending the future prediction image generated by the image processing unit on/with the LV image. In the case where the "future prediction image display mode" is set, the display unit 14 displays an image in which the future prediction image generated by the image processing unit is superimposed on or blended with the present photographed image, that is, the LV image, input from the imaging element.

It should be noted that, in the case where the LV image and the future prediction image are blended and displayed, the blend ratio thereof can be adjusted by the user.

An example of a UI (user interface) for this setting is illustrated in FIG. 7.

FIG. 7 illustrates the following UI example.
(a) UI example for adjusting blend ratio setting of LV image and future prediction image

Using the UI illustrated in FIG. 7, the user can adjust how the LV image and the future prediction image are to be blended to display the image to be displayed on the display unit 14 in the range of 100% of the LV image to 100% of the future prediction image.

By sliding the scroll bar 23 illustrated in the drawing to the left or right, the blending ratio of the image to be displayed on the display unit 14 can be adjusted.

The image processing unit of the imaging device 10 blends the LV image and the future prediction image and displays the image on the display unit 14 on the basis of the user setting information.

For example, in the case of the setting of 100% of the LV image, only an image corresponding to the future prediction image non-display mode, that is, the LV image, is displayed as illustrated in FIG. 6(1).

In addition, in the case of the setting of 100% of the future prediction image, an image of only the future prediction image is displayed as illustrated in FIG. 3(e).

Further, in the case of the setting of the blend ratio of 50%, an image corresponding to the future prediction image display mode, that is, an image in which the LV image and the future prediction image are superimposed, is displayed as illustrated in, for example, FIG. 6(2).

As described above, the user can make an adjustment by using the blend ratio adjustment UI.

It should be noted that a configuration in which automatic display switching control is performed without performing such adjustment processing on the UI may be employed. For example, the control is as follows.
(1) In a case where the user touches or half-presses the shutter, the display is switched from the LV image to the future prediction image.

Further, a configuration in which the camera is provided with an operation unit (a switch or the like) for switching display between the LV image and the future prediction image and such switching is made according to an operation of the operation unit may be employed.

### [2-(2) Regarding specific example of processing for displaying explanation or prediction information of movement of subject on display unit]

Next, a specific example of processing for displaying an explanation or prediction information of the movement of the subject, on the display unit, will be described.

FIG. 8 illustrates examples of processing executed by the image processing unit of the imaging device 10 of the present disclosure, and depicts diagrams for describing processing examples for displaying explanatory information relating to the movement of the subject, on the display unit 14.

The examples illustrated in FIG. 8 are examples of a case where a "bird" is included as the "moving subject" in the LV image input from the imaging element.

FIG. 8 illustrates states in which the user points the imaging device (camera) 10 toward the bird and the LV image is displayed on the display unit 14 of the imaging device 10.

FIG. 8 illustrates display data according to the time series of times t1 to t3 in (1) to (3).

First, the display image of the display unit 14 at (1) time t1 is the display of only the LV image.

The display image of the display unit 14 at (2) time t2 that comes next illustrates display data in which explanatory information "flying-off preparation" regarding the state of the moving subject (= bird) is displayed together with the LV image.

The display image of the display unit 14 at (3) time t3 that comes next also illustrates display data in which explanatory information "flying-off start" regarding the state of the moving subject (= bird) is displayed together with the LV image.

As described above, the image processing unit of the imaging device 10 of the present disclosure displays the explanatory information relating to the movement of the subject, on the display unit 14.

If the photographer as the user checks, for example, the explanatory information "flying-off preparation" additionally displayed on the display image of the display unit 14 at (2) time t2 and operates the shutter at this timing, an image immediately after the shutter operation, for example, an image at the moment of flying off illustrated in (3), can be photographed.

Without such an explanation, there is a possibility that, for example, the user hastily performs the shutter operation at the timing of time t3 illustrated in FIG. 8(3). This case can lead to a situation where an image in which the bird has flown off and disappeared from the screen is photographed.

As described above, the image processing unit of the imaging device 10 of the present disclosure outputs, together with the LV image, commentary information relating to the movement of the moving subject included in the LV image.

It should be noted that, in order to perform this processing, analysis data according to the type of moving subject included in the LV image is required.

For example, in the case where the moving subject included in the LV image is a bird, such analysis data as a dictionary by which what the posture and movement of the bird mean can be acquired would be necessary. The imaging device of the present disclosure stores the analysis data in a database in advance, and presents information according to the type of the moving subject included in the LV image by referring to the recording data in the database.

For example, the database stores analysis data relating to various types of moving subjects such as people, birds, dogs, and cats. That is, data in which the type of each moving subject, the posture and movement of the moving subject according to the processing to be executed, and the commentary information of the state are associated with each other is stored.

FIG. 9 depicts diagrams for describing specific examples of additionally displaying information together with the LV image on the display unit 14, similarly to FIG. 8. The examples illustrated in FIG. 9 are specific examples of processing for displaying prediction information of the movement of the subject on the display unit 14.

FIG. 9 illustrates the following display examples.
(a) Display example of LV image only
(b1) Movement prediction information additional display example 1 of moving subject (person)
(b2) Movement prediction information additional display example 2 of moving subject (person)
(b3) Movement prediction information additional display example 3 of moving subject (person)

Each of (b1) to (b3) is an example in which movement prediction information of the moving subject (person) is added and displayed in the image processing unit of the imaging device 10 of the present disclosure.

The (b1) movement prediction information additional display example 1 of moving subject (person) is an example in which prediction information "frame-out after seven seconds (3 Km per hour)" is additionally displayed as the movement prediction information of the moving subject (person).

The image processing unit of the imaging device 10 of the present disclosure analyzes the walking speed of the moving subject (person) by analyzing the continuously input LV images, and calculates a length of time for the moving subject (person) to be framed out. The prediction information "frame-out after seven seconds (3 Km per hour)" is additionally displayed on the display unit 14 on the basis of the calculation result.

On the basis of this information, the user (photographer) can perform various kinds of processing such as photographing by operating the shutter before the moving subject (person) is framed out or changing the direction of the camera.

The (b2) movement prediction information additional display example 2 of moving subject (person) is an example in which an arrow icon indicating the moving direction of the moving subject (person) is additionally displayed as the movement prediction information of the moving subject (person).

The image processing unit of the imaging device 10 of the present disclosure analyzes the moving direction of the moving subject (person) by analyzing the continuously input LV images, and additionally displays the arrow indicating the moving direction of the moving subject (person) on the display unit 14 on the basis of the analysis result.

The user (photographer) can recognize the moving direction of the moving subject (person) and perform processing such as changing the direction of the camera, on the basis of this information.

The (b3) movement prediction information additional display example 3 of moving subject (person) is an example in which prediction information "image of moving subject (person) after predetermined period of time" is displayed while being superimposed on the LV image as the movement prediction information of the moving subject (person).

The image processing unit of the imaging device 10 of the present disclosure analyzes the walking speed of the moving subject (person) by analyzing the continuously input LV images, and calculates the position where the moving subject (person) is present after elapse of a predetermined period of time. The prediction information "image of moving subject (person) after predetermined period of time" is additionally displayed on the display unit 14 on the basis of the calculation result.

The user (photographer) can recognize, for example, the optimum photographing timing of the moving subject (person) in advance on the basis of this information, and can photograph the image envisioned by the user.

Further, FIG. 10 depicts diagrams for describing specific examples of additionally displaying information together with the LV image on the display unit 14, similarly to FIG. 8 and FIG. 9.

The examples illustrated in FIG. 10 are display examples of prediction information for preventing an image of a state with the eyes closed due to blinking from being photographed when photographing the face of a person.

In the drawing, an eye region image that is a part of a face image of a person displayed on the display unit 14 of the imaging device 10 is extracted and illustrated.

FIG. 10(1) illustrates a part of an input image input from the imaging element of the imaging device 10 to the image processing unit. An eye region image that is a part of a face image of a person is extracted and illustrated. Four examples of (1a) to (1d) are illustrated as examples of the input images.

When these images are input, the image processing unit of the imaging device 10 of the present disclosure analyzes the states of the eyes included in the input images. Specifically, it is determined whether the state of each eye is a (X) state determined not to cause blinking immediately thereafter or a (Y) state determined to be blinking or blink immediately thereafter.

The examples determined to be in the (X) state determined not to cause blinking immediately thereafter in the states of the eyes included in the input images are examples illustrated in FIGS. 10(1a) and (2a).

In this case, the image processing unit displays only the LV image illustrated in (2a) on the display unit 14.

On the other hand, the examples determined to be in the (Y) state determined to be blinking or blink immediately thereafter in the states of the eyes included in the input images are examples illustrated in FIGS. 10(1b to 12) and (2b to 2d).

In this case, the image processing unit displays prediction information "blinking caution" illustrated in (2b to 2d) on the display unit 14.

The user (photographer) can check this information and stop photographing using the shutter operation at this timing.

It should be noted that this processing is also executed by referring to the recording information of the database described above, that is, the database storing the movement prediction data of various moving subjects analyzed in advance.

### [3. Regarding specific example of analysis processing referring to database executed by image processing unit of image processing device of present disclosure]

Next, specific examples of analysis processing referring to the database executed by the image processing unit of the image processing device of the present disclosure will be described.

As described above, the image processing unit of the imaging device 10 of the present disclosure outputs, together with the LV image, the prediction information and the commentary information regarding the movement of the moving subject included in the LV image.

In order to perform this processing, the image processing unit acquires, for example, analysis data according to the type of moving subject included in the LV image, from the database, and refers to the acquired analysis data.

As described above, for example, in the case where the moving subject included in the LV image is a bird, such analysis data as a dictionary by which what the posture and movement of the bird mean can be acquired would be necessary. The imaging device of the present disclosure stores the analysis data in the database in advance, and presents information according to the type of moving subject included in the LV image by referring to the recording data of the database.

For example, the database stores analysis data relating to various types of moving subjects such as people, birds, dogs, and cats. That is, data in which the type of each moving subject, the posture and movement of the moving subject according to the processing to be executed, and the commentary information of the state are associated with each other is stored.

Specific examples of processing executed by the image processing unit of the imaging device 10 of the present disclosure on the basis of data stored in the database will be described with reference to FIG. 11 and FIG. 12.

FIG. 11 and FIG. 12 are diagrams each illustrating a processing example for each scene executed by the image processing unit of the imaging device 10 of the present disclosure.

It should be noted that scene analysis is executed in such a manner that the image processing unit compares the input LV image with data for scene specification stored in the database.

The database stores, for example, feature data for scene specification corresponding to seven scene categories illustrated in FIG. 11 and FIG. 12. Scenes 1 to 7 illustrated in FIG. 11 and FIG. 12 are as follows.
1. Sports in which a person uses a plurality of movable tools (tennis, baseball, badminton, golf)
2. Sports in which a person uses one movable tool (soccer, kendo)
3. Sports in which a person uses no movable tools (track and field, swimming, dancing, artistic gymnastics, judo)
4. Portrait photographing
5. Animal photographing
6. Mobile object photographing
7. Landscape photographing

The image processing unit of the imaging device 10 of the present disclosure first compares the LV image input from the imaging element with the data for scene specification stored in the database, and determines which scene of 1 to 7 the input LV image corresponds to.

When the scene determination is completed, a moving subject as a movement analysis target in the scene is specified.

The specification of the moving subject is executed as processing for detecting the moving subject from the consecutive input images.

The item "(b) movement analysis target" in FIG. 11 and FIG. 12 illustrates an example of a moving subject detected in each scene, that is, a moving subject as a target for movement analysis processing.

In the case of "scene 1: sports in which a person uses a plurality of movable tools (tennis, baseball, badminton, golf)," a human body, a tool 1 (racket), and a tool 2 (ball) are moving subjects, that is, moving subjects as targets for the movement analysis processing.

In the case of "scene 2: sports in which a person uses one movable tool (soccer, kendo)," a human body and a tool 1 (ball) are moving subjects, that is, moving subjects as targets for the movement analysis processing.

In the case of "scene 3: sports in which a person uses no movable tools (track and field, swimming, dancing, artistic gymnastics, judo)," a human body is a moving subject, that is, a moving subject as a target for the movement analysis processing.

In the case of "scene 4: portrait photographing," a human body and a face are moving subjects, that is, moving subjects as targets for the movement analysis processing.

In the case of "scene 5: animal photographing," an animal is a moving subject, that is, a moving subject as a target for the movement analysis processing.

In the case of "scene 6: mobile object photographing," a mobile object is a moving subject, that is, a moving subject as a target for the movement analysis processing.

In the case of "scene 7: landscape photographing," the movement of a target object and signs of appearance are targets for the movement analysis processing.

For example, after specifying the "(b) movement analysis target" corresponding to each scene, the image processing unit decides a specific movement prediction mode and a prediction timing for each of these movement analysis targets. That is, for example, specifying processing of "movement prediction mode and prediction timing" illustrated in (c) of FIG. 11 and FIG. 12 is executed.

In the case of "scene 1: sports in which a person uses a plurality of movable tools (tennis, baseball, badminton, golf)," the movement prediction of a tool 1 (racket) and a tool 2 (ball) is performed, and the timing of impact is used as a movement prediction timing.

Specifically, for example, timing prediction of the following events described in the "specific example" is performed.
The movement and moment when a racket hits a ball
The movement and moment when a bat hits a ball
The movement and moment when a racket hits a shuttlecock
The moment when it is determined that a ball has entered the goal

In the case of "scene 2: sports in which a person uses one movable tool (soccer, kendo)," movement prediction of a person and a tool 1 (ball) is performed, and the timing of impact is used as the movement prediction timing.

Specifically, for example, timing prediction of the following events described in the "specific example" is performed.
The movement and moment when a foot hits a ball
The movement and moment when a hand hits a ball
The movement and moment when a ball leaves a hand
The movement and moment when a bamboo sword hits a face guard

In the case of "scene 3: sports in which a person uses no movable tools (track and field, swimming, dancing, artistic gymnastics, judo)," the movement prediction of a human body is performed and the best timing people would like to see in the sport is used as the movement prediction timing.

Specifically, for example, timing prediction of the following events described in the "specific example" is performed.
The moment of crossing the finish line
The moment of overtaking
The highest point of a jump in the long jump
The moment of striking a pose
The moment of hitting a punch in boxing
The movement or moment of tackling
The movement or moment of being knocked down by a tackle
The moment a body is floating in the air with a throwing technique

In the case of "scene 4: portrait photographing," the movement prediction of a human body and a face is performed, and the timing of the optimum posture and expression for a portrait is used as the movement prediction timing.

Specifically, for example, timing prediction of the following events described in the "specific example" is performed.
The moment of smiling
The moment when several people are not closing their eyes
The moment when a person has turned around
The moment when eyes are not closed with a good mouth shape during a speech

In the case of "scene 5: animal photographing," the movement prediction of an animal is performed, and the timing of start of the movement of the animal or a remarkable movement is used as the movement prediction timing.

Specifically, for example, timing prediction of the following events described in the "specific example" is performed.
The movement and moment when a bird flies off
The moment when the wings of a bird are stretched out
The movement and moment when an animal starts running
The movement and moment when an animal looks over here
The moment when an animal preys on another animal (opens the mouth wide)
The moment when an aquatic animal comes out from the water surface

In the case of "scene 6: mobile object photographing," the movement prediction of a mobile object is performed, and the timing at which the mobile object is in the optimum composition is used as the movement prediction timing.

Specifically, for example, timing prediction of the following events described in "specific example" is performed.
A front picture of a running train
A goal scene in a car race
A takeoff or landing scene of an airplane

In the case of "scene 7: landscape photographing," the timing at which an object appears is predicted, and the timing at which the object is at the optimum position is used as the movement prediction timing.

Specifically, for example, timing prediction of the following events described in "specific example" is performed.
The moment when lightning strikes
The moment when a shooting star is reflected beautifully
The moment when fireworks have exploded widely
The moment when the trajectories of fireworks are reflected beautifully

### [4. Regarding learning processing executed as generation processing of data stored in database and usage processing of learning result]

Next, learning processing executed as generation processing of data stored in the database and usage processing of a learning result will be described.

The database stores data acquired by machine learning processing executed in advance. The image processing device of the present disclosure executes learning processing for outputting various types of prediction data corresponding to various scenes, and stores the learning results in the database.

Specific examples of the learning processing will be described with reference to FIG. 13 and the diagrams that follow.

FIG. 13 illustrates a learning machine/determining machine 51 configured in the image processing device of the present disclosure and a database 52 for storing learning results.

The learning machine of the learning machine/determining machine 51 executes learning processing for estimating prediction data of future movements and changes by using time-series image data corresponding to various scenes as input data 40. The learning result is stored in the database 52.

It should be noted that various algorithms can be used as learning algorithms. For example, a Gaussian process, a Bayesian neural network, a support vector machine (SVM), logistic regression, and the like can be used.

In addition, the determining machine of the learning machine/determining machine 51 generates and outputs output 60 including future prediction data, by using the learning results stored in the database 52.

The future prediction image generated in each of the above-described embodiments is executed by using the learning data stored in the database 52.

The learning machine of the learning machine/determining machine 51 executes learning processing for acquiring output (prediction image and the like) corresponding to each scene in various scene units.

For example, a large number of existing time-series images obtained by photographing a scene in which a bird flies off as a specific scene are input, and learning processing for estimating which images are the image of the moment when the bird flies off and the image immediately therebefore is executed.

That is, in a case where the moment when a person kicks a ball is specified, time-series images in which many different people kick a ball are input, and learning processing for estimating which images are the image of the moment when a person kicks the ball and the image immediately therebefore is executed.

The pieces of learning result data corresponding to these scenes are stored in the database.

The determining machine of the learning machine/determining machine 51 inputs a new processing target image (time-series image) for performing future prediction, to first determine a scene, and then generates and outputs the output 60 including the future prediction data, by using the learning result corresponding to the scene stored in the database 52.

For example, in the case where the newly input processing target image (time-series image) is the image of the bird described above with reference to FIG. 8, the image frame that would be obtained immediately before the moment when the bird flies off is estimated by referring to the learning data obtained by analyzing the scene as of the moment when the bird flies off that is stored in the database 52, and output processing of the explanatory information as described above with reference to FIG. 8 and the like are executed.

As described above, the learning processing and the determination processing (future prediction processing) of the learning machine/determining machine 51 are executed as different processing for each scene.

Specific examples of input data and output data for/from the learning machine/determining machine 51 illustrated in FIG. 13 will be described with reference to FIG. 14 and FIG. 15.

FIG. 14 and FIG. 15 are diagrams for illustrating specific examples of input data and output data for each scene for/from the learning machine/determining machine 51, similarly to FIG. 11 and FIG. 12 described above.

The scenes are the following scenes 1 to 7.
1. Sports in which a person uses a plurality of movable tools (tennis, baseball, badminton, golf)
2. Sports in which a person uses one movable tool (soccer, kendo)
3. Sports in which a person uses no movable tools (track and field, swimming, dancing, artistic gymnastics, judo)
4. Portrait photographing
5. Animal photographing
6. Mobile object photographing
7. Landscape photographing

Each of FIG. 14 and FIG. 15 illustrates a (b) movement analysis target corresponding to each scene and (p) input data and (q) output data for/from the learning machine/determining machine 51.

The "(b) movement analysis target" is a moving subject detected in each scene, that is, a moving subject targeted for movement analysis processing.

The "(p) input data" is input data for the learning machine/determining machine 51. Specifically, the data is time-series image data.

The "(q) output data" is output data from the learning machine/determining machine 51. When the learning processing is executed, the output data is output data estimated on the basis of the input data, and the combination data of the input data and the output data is stored in the database 52.

When the determination processing (prediction processing) is executed, the database 52 is searched on the basis of the input data to select the learning data closer to the input data, and prediction data as output data, for example, a prediction image, is generated and output.

The learning machine/determining machine 51 specifies the "(b) movement analysis target" corresponding to each scene, and then executes the learning processing by the learning machine or the determination processing (prediction processing) by the determining machine for these movement analysis targets.

Hereinafter, specific examples of the "(b) movement analysis target" corresponding to each scene to be processed by the learning machine/determining machine 51, the "(p) input data" for the learning machine/determining machine 51, and the "(q) output data" generated by the learning machine/determining machine 51 will be described.

In the case of "scene 1: sports in which a person uses a plurality of movable tools (tennis, baseball, badminton, golf)," the "(b) movement analysis targets" to be processed by the learning machine/determining machine 51 are a human body, a tool 1 (racket), and a tool 2 (ball).

The "(p) input data" for the learning machine/determining machine 51 is time-series images of the movements of the tool 1 (racket) and the tool 2 (ball).

The "(q) output data" generated by the learning machine/determining machine 51 is a future image of the movements of the tool 1 (racket) and the tool 2 (ball), the timing of impact, or the like.

The learning machine/determining machine 51 estimates, for example, the movements and timings of the following events described in the "specific example."
The movement and moment when a racket hits a ball
The movement and moment when a bat hits a ball
The movement and moment when a racket hits a shuttlecock
The moment when it is determined that a ball has entered the goal

The learning machine executes the learning processing for estimating the movements and timings of these events and stores the learning results in the database 52. Further, the determining machine generates the prediction data by using the learning results stored in the database 52.

In the case of "scene 2: sports in which a person uses one movable tool (soccer, kendo)," the "(b) movement analysis targets" to be processed by the learning machine/determining machine 51 are a human body and a tool 1 (ball).

The "(p) input data" for the learning machine/determining machine 51 is time-series images of the movements of the person and the tool 1 (ball).

The "(q) output data" generated by the learning machine/determining machine 51 is a future image of the movements of the person and the tool 1 (ball), the timing of impact, or the like.

The learning machine/determining machine 51 estimates, for example, the movements and timings of the following events described in the "specific example."
The movement and moment when a foot hits a ball
The movement and moment when a hand hits a ball
The movement and moment when a ball leaves a hand
The movement and moment when a bamboo sword hits a face guard

The learning machine executes the learning processing for estimating the movements and timings of these events and stores the learning results in the database 52. Further, the determining machine generates the prediction data by using the learning results stored in the database 52.

In the case of "scene 3: sports in which a person uses no movable tools (track and field, swimming, dancing, artistic gymnastics, judo)," the "(b) movement analysis target" to be processed by the learning machine/determining machine 51 is a human body.

The "(p) input data" for the learning machine/determining machine 51 is time-series images of the movement of the human body.

The "(q) output data" generated by the learning machine/determining machine 51 is a future image of the movement of the human body, the best timing people would like to see in the sport, and the like.

The learning machine/determining machine 51 estimates, for example, the movements and timings of the following events described in the "specific example."
The moment of crossing the finish line
The moment of overtaking
The highest point of a jump in the long jump
The moment of striking a pose
The moment of hitting a punch in boxing
The movement or moment of tackling
The movement or moment of being knocked down by a tackle
The moment when a body is floating in the air with a throwing technique

The learning machine executes the learning processing for estimating the movements and timings of these events and stores the learning results in the database 52. Further, the determining machine generates the prediction data by using the learning results stored in the database 52.

In the case of "scene 4: portrait photographing," the "(b) movement analysis targets" to be processed by the learning machine/determining machine 51 are a human body and a face.

The "(p) input data" for the learning machine/determining machine 51 is time-series images of the movements of the human body and the face.

The "(q) output data" generated by the learning machine/determining machine 51 is a future image of the movements of the human body and the face, the timing of the optimum posture and expression for a portrait, and the like.

The learning machine/determining machine 51 estimates, for example, the movements and timings of the following events described in the "specific example."
The moment of smiling
The moment when several people are not closing their eyes
The moment when a person has turned around
The moment when eyes are not closed with a good mouth shape during a speech

The learning machine executes the learning processing for estimating the movements and timings of these events and stores the learning results in the database 52. Further, the determining machine generates the prediction data by using the learning results stored in the database 52.

In the case of "scene 5: animal photographing," the "(b) movement analysis target" to be processed by the learning machine/determining machine 51 is an animal.

The "(p) input data" for the learning machine/determining machine 51 is time-series images of the movement of the animal.

The "(q) output data" generated by the learning machine/determining machine 51 is a future image of the movement of the animal, the timing of start of the movement of the animal or a remarkable movement, and the like.

The learning machine/determining machine 51 estimates, for example, the movements and timings of the following events described in the "specific example."
The movement and moment when a bird flies off
The moment when the wings of a bird are stretched out
The movement and moment when an animal starts running
The movement and moment when an animal looks over the imaging device 10
The moment when an animal preys on another animal (opens the mouth wide)
The moment when an aquatic animal comes out from the water surface

The learning machine executes the learning processing for estimating the movements and timings of these events and stores the learning results in the database 52. Further, the determining machine generates the prediction data by using the learning results stored in the database 52.

In the case of "scene 6: mobile object photographing," the "(b) movement analysis target" to be processed by the learning machine/determining machine 51 is a mobile object.

The "(p) input data" for the learning machine/determining machine 51 is time-series images of the movement of the mobile object.

The "(q) output data" generated by the learning machine/determining machine 51 is a future image of the movement of the moving object, the timing at which the mobile object is in the optimum composition, or the like.

The learning machine/determining machine 51 estimates, for example, the movements and timings of the following events described in the "specific example."
A front picture of a running train
A goal scene in a car race
A takeoff or landing scene of an airplane

The learning machine executes the learning processing for estimating the movements and timings of these events and stores the learning results in the database 52. Further, the determining machine generates the prediction data by using the learning results stored in the database 52.

In the case of "scene 7: landscape photographing," the "(b) movement analysis target" to be processed by the learning machine/determining machine 51 is the movement of an object to be predicted and signs of appearance.

The "(p) input data" for the learning machine/determining machine 51 is time-series images of the movement of the object to be predicted.

The "(q) output data" generated by the learning machine/determining machine 51 is the timing at which the prediction target appears, the timing at which the object is at the optimum position, or the like.

The learning machine/determining machine 51 estimates, for example, the movements and timings of the following events described in the "specific example."
The moment when lightning strikes
The moment when a shooting star is reflected beautifully
The moment when fireworks have exploded widely
The moment when the trajectories of fireworks are reflected beautifully

The learning machine executes the learning processing for estimating the movements and timings of these events and stores the learning results in the database 52. Further, the determining machine generates the prediction data by using the learning results stored in the database 52.

As described above, the learning machine of the learning machine/determining machine 51 executes the learning processing for acquiring the output (prediction image and the like) corresponding to each scene in various scene units.

In addition, the determining machine of the learning machine/determining machine 51 inputs a new processing target image (time-series image) for performing future prediction, to first determine a scene, and then generates and outputs the output 60 including the future prediction data by using the learning result corresponding to the scene stored in the database 52.

### [5. Regarding configuration example of image processing device of present disclosure]

Next, a configuration example of the image processing device of the present disclosure will be described.

FIG. 16 is a block diagram illustrating a configuration example of an image processing device (camera) 100 of the present disclosure. The image processing device 100 corresponds to the imaging device 10 illustrated in FIG. 1.

As illustrated in FIG. 16, the image processing device 100 has a lens 101, an image sensor 102, an image processing unit 103, a database 104, a memory 105, a communication unit 106, a drive unit 107, a control unit 108, an input unit 109, a display unit 110, and a storage unit 111.

A photographed image is captured in the image sensor 102 through the lens 101.

The image sensor 102 is, for example, a CCD (Charge Coupled Devices) image sensor, a CMOS (Complementary Metal Oxide Semiconductor) image sensor, or the like.

The image processing unit 103 inputs image data, for example, an LV image, output from the image sensor 102, to perform the above-described processing, that is, to identify a moving subject included in the LV image, performs state analysis and movement prediction of the moving subject, generates a future prediction image, and generates state information and prediction information of the moving subject.

The image processing unit 103 also has the function of the learning machine/determining machine 51 described above with reference to FIG. 13, and executes the learning processing and the determination processing (prediction processing).

It should be noted that the image processing unit 103 also executes signal processing associated with normal image photographing. For example, signal processing in a general camera such as de-mosaic processing, white balance (WB) adjustment, and gamma correction is executed.

The database 104 is a database in which data to be referred to in the identification processing of the moving subject executed in the image processing unit 103, the state analysis and movement prediction of the moving subject, the generation of the future prediction image, and further the generation processing of the state information and prediction information of the moving subject is recorded.

That is, as described above, the database 104 stores analysis data relating to various types of moving subjects such as people, birds, dogs, and cats. That is, data in which the type of each moving subject, the posture and movement of the moving subject according to the processing to be executed, and the commentary information of the state are associated with each other is stored.

The memory 105 is a memory that includes a RAM, a ROM, and the like for storing photographed images and that is used as storage regions for processing programs executed in the image processing device 100, various parameters, and the like.

The communication unit 106 is a communication unit used for communication processing with an external device, for example, a server, or other information terminals.

The drive unit 107 performs various kinds of drive processing required for image photographing such as lens driving and diaphragm control for image photographing. This drive processing is executed under the control of, for example, the control unit 108.

The control unit 108 executes control of various kinds of processing executed by the image processing device (camera) 100, such as image photographing, image analysis, determination processing as movement prediction, learning processing, and communication processing. The control unit 108 functions as a data processing unit that executes various kinds of processing in accordance with a data processing program stored in the memory 105.

The input unit 109 is an input unit for inputting various kinds of setting information by the user in addition to the shutter. Each of the UIs used for adjustment of the future prediction image setting time and the input processing of the data for adjusting the blend ratio between the LV image and the future prediction image described above with reference to FIG. 5 and FIG. 7 is also a part of the input unit 109.

The display unit 110 corresponds to the display unit 14 of the imaging device 10 illustrated in FIG. 1. The LV image is displayed, the future prediction image is displayed, and display processing for the moving subject information and the prediction information and the like are performed. In addition, the display unit 110 is also used to display the UI screens.

The storage unit 111 is used as a storage region for photographed images, and further used as a storage region for various processing parameters, programs, and the like.

It should be noted that a smartphone having a camera function also has the hardware configuration illustrated in FIG. 16.

Next, a detailed configuration example of the image processing unit 103 will be described with reference to FIG. 17.

As illustrated in FIG. 17, the image processing unit 103 has a scene determination unit 201, a moving subject identification unit 202, a moving subject state and movement analysis unit 203, a display information generation unit 204, and a recording information generation unit 205.

The scene determination unit 201 determines a photographed scene on the basis of an input image (LV image) 301 input from the image sensor 102. The scene determination is executed by referring to data for scene determination stored in the database 104. Specifically, for example, it is determined which of the following scenes 1 to 7 described above with reference to FIG. 11 and FIG. 12 the scene corresponds to.
1. Sports in which a person uses a plurality of movable tools (tennis, baseball, badminton, golf)
2. Sports in which a person uses one movable tool (soccer, kendo)
3. Sports in which a person uses no movable tools (track and field, swimming, dancing, artistic gymnastics, judo)
4. Portrait photographing
5. Animal photographing
6. Mobile object photographing
7. Landscape photographing

The scene determination result of the scene determination unit 201 is input to the moving subject identification unit 202 together with the input image (LV image) 301.

The moving subject identification unit 202 detects a moving subject from the inside of the input image (LV image) 301 and identifies the moving subject targeted for movement prediction. It should be noted that, in the moving subject identification processing, the scene determination result of the scene determination unit 201 can be used. The database 104 stores moving subject information that has high detectability and corresponds to each scene. The data is illustrated in the item (b) illustrated in FIG. 11 and FIG. 12.

The moving subject identification unit 202 refers to the data stored in the database 104, to decide a moving subject as a target for movement prediction from the input image (LV image) 301.

For example, a target for movement prediction such as a person, a bird, or a human eye is specified.

The moving subject identification information of the movement prediction processing target specified by the moving subject identification unit 202 is input to the moving subject state and movement analysis unit 203 together with the input image (LV image) 301.

The moving subject state and movement analysis unit 203 performs the state analysis and movement prediction of the movement prediction processing target specified by the moving subject identification unit 202. For this processing, analyzed data (learning result data) stored in the database 104 is used.

As described above, the database 104 stores analysis data relating to various types of moving subjects such as people, birds, dogs, and cats. That is, data in which the type of each moving subject, the posture and movement of the moving subject according to the processing to be executed, and the commentary information of the state are associated with each other is stored.

The moving subject state and movement analysis unit 203 refers to the data stored in the database 104, for the movement prediction processing target specified by the moving subject identification unit 202, and performs the state analysis and movement prediction of the moving subject.

The pieces of data analyzed by the moving subject state and movement analysis unit 203, that is, the state analysis information and the movement prediction information of the moving subject specified as the analysis target by the moving subject identification unit 202, are input to the display information generation unit 204.

On the basis of the state analysis information and the movement prediction information of the moving subject input from the moving subject state and movement analysis unit 203, the display information generation unit 204 generates the future prediction image to be displayed on the display unit 110, information explaining the state of the moving subject, information explaining the future movement of the moving subject, and the like.

Specifically, for example, data for displaying (1) the future prediction image described with reference to FIG. 2, FIG. 3, and FIG.6 and (2) the information explaining the state of the moving subject and the information explaining the future movement of the moving subject described with reference to FIG. 8 to FIG. 10 is generated.

The display information generation unit 204 further outputs the pieces of information (1) and (2) to the display unit 110 and displays the same together with the input image (LV image) input from the image sensor 102.

It should be noted that the display mode for the display unit 110 is changed according to setting information through the input unit 109 by the user. For example, the user can set the length of time the future prediction image to be used as the future prediction image to be displayed is to be ahead for, by using the UIs described above with reference to FIG. 5. In addition, the blend ratio between the future prediction image and the LV image can be set by the user with use of the UI described above with reference to FIG. 7.

The display information generation unit 204 generates display information according to these user settings and displays the same on the display unit 110.

The recording information generation unit 205 executes processing for recording the image input from the image sensor 102 into the storage unit 111, according to the operation of the shutter configuring the input unit 109. It should be noted that, in this image recording processing, signal processing similar to that of the imaging device in the prior art is executed.

It should be noted that, in the configuration illustrated in FIG. 17, as an image to be applied to the scene determination processing by the scene determination unit 201, the moving subject identification processing in the moving subject identification unit 202, and the analysis processing in the moving subject state and movement analysis unit 203, the input image (LV image) 301 input from the image sensor 102 is used as it is.

However, when the amount of data is large, the length of time required for the analysis processing becomes long, and thus, in order to shorten the length of processing time, the image input to these processing units may be, for example, an image in which the amount of data is reduced by pixel thinning.

An example of such a configuration is illustrated in FIG. 18.

In the example illustrated in FIG. 18, images output from the image sensor 102 are two types of images. The normal high-pixel input image (LV image) 301 is output to the display information generation unit 204 and the recording information generation unit 205.

On the other hand, for example, an image for identification 321 in which the amount of data is reduced by pixel thinning is output to the image analysis processing execution units that continue from the scene determination unit 201.

With this configuration, it is possible to execute the analysis processing in a short period of time in the image analysis processing execution units that continue from the scene determination unit 201.

Further, a configuration in which a plurality of imaging elements is provided may be employed. For example, if a configuration in which two imaging elements are provided at spaced positions to analyze these two images is employed, the distance to the subject can be calculated, and highly-accurate three-dimensional movement analysis of the movement of the subject can be performed.

Further, for example, as a configuration in which high-speed photographing is possible or a configuration in which an infrared sensor and a ranging sensor are provided, a configuration in which the movement prediction of the moving subject is performed with use of these high-speed photographed images and sensor acquisition information may be employed.

### [6. Summary of configuration of present disclosure]

The embodiment of the present disclosure has been described above in detail with reference to the specific embodiment. However, it is obvious that a person skilled in the art can modify or substitute the embodiment without departing from the gist of the present disclosure. That is, the present invention has been disclosed in an exemplified manner and should not be interpreted in a limited manner. In order to determine the gist of the present disclosure, the section of claims should be considered.

It should be noted that the technique disclosed in the specification can be configured as follows.
(1) An image processing device including:
   an image processing unit that executes movement prediction of a moving subject included in an input image from an imaging unit, generates a future prediction image, and displays the image on a display unit.
(2) The image processing device according to (1),
   in which the image processing device includes an imaging device, and
   the future prediction image generated by the image processing unit includes a future prediction image in which a delay time based on a delay factor that occurs between a subject photographing start preparation operation for the imaging device by a user and completion of image photographing is taken into consideration.
(3) The image processing device according to (2),
   in which the image processing device includes an imaging device, and
   the future prediction image generated by the image processing unit includes a future prediction image ahead by a length of time corresponding to a total delay time of a display delay for the display unit of the imaging device and a delay time between a shutter operation and image recording.
(4) The image processing device according to any one of (1) to (3),
   in which the image processing unit executes movement prediction of a moving subject on the basis of a plurality of consecutive photographed images input from the imaging element.
(5) The image processing device according to any one of (1) to (4),
   in which the image processing device has a configuration in which the user is able to set a length of time the image to be used as the future prediction image to be displayed on the display unit by the image processing unit is to be ahead for, and
   the image processing unit generates the future prediction image to be displayed on the display unit, according to the user setting information.
(6) The image processing device according to any one of (1) to (5),
   in which the image processing unit outputs, to the display unit, a live view image (LV image) as an input image from the imaging unit, and switches the live view image to the future prediction image and outputs the image to the display unit.
(7) The image processing device according to any one of (1) to (6),
   in which the image processing unit superimposes or blends a live view image (LV image) as an input image from the imaging unit and the future prediction image and outputs the image to the display unit.
(8) The image processing device according to (7),
   in which the image processing device has a configuration in which the user is able to set a blend ratio between the live view image (LV image) and the future prediction image, and
   the image processing unit generates a blend image to be displayed on the display unit, according to the user setting information.
(9) The image processing device according to any one of (1) to (8),
   in which the image processing unit analyzes a state of a moving subject included in the input image, generates explanatory information of the analyzed state of the moving subject, and displays the information on the display unit.
(10) The image processing device according to (9),
   in which the image processing unit analyzes the state of the moving subject included in the input image by referring to data accumulated in a database.
(11) The image processing device according to any one of (1) to (10),
   in which the image processing unit executes movement prediction of the moving subject included in the input image, generates explanatory information for explaining the movement prediction result, and displays the information on the display unit.
(12) The image processing device according to (11),
   in which the explanatory information includes information describing a length of time for the moving subject to be framed out.
(13) The image processing device according to (11),
   in which the explanatory information includes an icon indicating a movement direction.
(14) The image processing device according to (11),
   in which the explanatory information includes caution information for explaining that blinking of eyes of a person is to be executed.
(15) An image processing method executed in an image processing device,
   in which an image processing unit executes movement prediction of a moving subject included in an input image from an imaging unit, generates a future prediction image, and displays the image on a display unit.
(16) A program that causes an image processing unit in an image processing device to execute image processing of executing movement prediction of a moving subject included in an input image from an imaging unit, generating a future prediction image, and displaying the image on a display unit.

In addition, the series of processing described in the specification can be executed by hardware, software, or a combined configuration of the two. In the case of executing the processing by software, the processing can be executed by installing a program in which the processing sequence is recorded, in a memory in a computer incorporated in dedicated hardware, or by installing the program in a general-purpose computer capable of executing various kinds of processing. For example, the program can be recorded in advance on a recording medium. In addition to installing the program on a computer from a recording medium, the program can be received via a network such as a LAN (Local Area Network) or the Internet and installed on a recording medium such as a built-in hard disk.

It should be noted that the various kinds of processing described in the specification are executed not only in time series according to the description, but also in parallel or individually according to the processing capability of a device executing the processing or as necessary. In addition, the system in the present specification is a logical assembly configuration of a plurality of devices, and is not limited to a system in which the devices of each configuration are provided in the same housing.

### [Industrial Applicability]

As described above, according to a configuration of an embodiment of the present disclosure, a device and a method that execute movement prediction of a moving subject included in an input image from an imaging unit, generate a future prediction image, and display the image on a display unit are realized.

Specifically, for example, an image processing unit that executes movement prediction of a moving subject included in an input image from an imaging unit, generates a future prediction image, and displays the image on a display unit is provided. The future prediction image to be displayed is an image in which a delay time based on a delay factor that occurs between a subject photographing start preparation operation by a user and completion of image photographing is taken into consideration, and is, for example, a future prediction image ahead by a total delay time of a display delay for the display unit and a delay time between a shutter operation and image recording. Further, the image processing unit analyzes the state of the moving subject included in the input image, generates information for explaining the state and information for explaining the movement to be predicted, and displays the information on the display unit.

With the configuration, the device and the method that execute movement prediction of the moving subject included in the input image from the imaging unit, generate the future prediction image, and display the image on the display unit are realized.

### [Reference Signs List]

- 10:: Imaging device
- 11:: Lens
- 12:: Shutter
- 13, 15:: Various operation units
- 14:: Display unit (monitor unit)
- 21, 23:: Scroll bar
- 22:: Setting auxiliary information
- 51:: Learning machine/determining machine
- 52:: Database
- 100:: Image processing device
- 101:: Lens
- 102:: Image sensor
- 103:: Image processing unit
- 104:: Database
- 105:: Memory
- 106:: Communication unit
- 107:: Drive unit
- 108:: Control unit
- 109:: Input unit
- 110:: Display unit
- 111:: Storage unit
- 201:: Scene determination unit
- 202:: Moving subject identification unit
- 203:: Moving subject state and movement analysis unit
- 204:: Display information generation unit
- 205:: Recording information generation unit
- 301:: Input Image (LV image)
- 321:: Image for identification

## Claims

1. An image processing device comprising:
an image processing unit that executes movement prediction of a moving subject included in an input image from an imaging unit, generates a future prediction image, and displays the image on a display unit.

2. The image processing device according to claim 1,
wherein the image processing device includes an imaging device, and
the future prediction image generated by the image processing unit includes a future prediction image in which a delay time based on a delay factor that occurs between a subject photographing start preparation operation for the imaging device by a user and completion of image photographing is taken into consideration.

3. The image processing device according to claim 1,
wherein the image processing device includes an imaging device, and
the future prediction image generated by the image processing unit includes a future prediction image ahead by a length of time corresponding to a total delay time of a display delay for the display unit of the imaging device and a delay time between a shutter operation and image recording.

4. The image processing device according to claim 1,
wherein the image processing unit executes movement prediction of a moving subject on a basis of a plurality of consecutive photographed images input from the imaging element.

5. The image processing device according to claim 1,
wherein the image processing device has a configuration in which the user is able to set a length of time the image to be used as the future prediction image to be displayed on the display unit by the image processing unit is to be ahead for, and
the image processing unit generates the future prediction image to be displayed on the display unit, according to the user setting information.

6. The image processing device according to claim 1,
wherein the image processing unit outputs, to the display unit, a live view image (LV image) as an input image from the imaging unit, and switches the live view image to the future prediction image and outputs the image to the display unit.

7. The image processing device according to claim 1,
wherein the image processing unit superimposes or blends a live view image (LV image) as an input image from the imaging unit and the future prediction image and outputs the image to the display unit.

8. The image processing device according to claim 7,
wherein the image processing device has a configuration in which the user is able to set a blend ratio between the live view image (LV image) and the future prediction image, and
the image processing unit generates a blend image to be displayed on the display unit, according to the user setting information.

9. The image processing device according to claim 1,
wherein the image processing unit analyzes a state of a moving subject included in the input image, generates explanatory information of the analyzed state of the moving subject, and displays the information on the display unit.

10. The image processing device according to claim 9,
wherein the image processing unit analyzes the state of the moving subject included in the input image by referring to data accumulated in a database.

11. The image processing device according to claim 1,
wherein the image processing unit executes movement prediction of the moving subject included in the input image, generates explanatory information for explaining the movement prediction result, and displays the information on the display unit.

12. The image processing device according to claim 11,
wherein the explanatory information includes information describing a length of time for the moving subject to be framed out.

13. The image processing device according to claim 11,
wherein the explanatory information includes an icon indicating a movement direction.

14. The image processing device according to claim 11,
wherein the explanatory information includes caution information for explaining that blinking of eyes of a person is to be executed.

15. An image processing method executed in an image processing device,
wherein an image processing unit executes movement prediction of a moving subject included in an input image from an imaging unit, generates a future prediction image, and displays the image on a display unit.

16. A program that causes an image processing unit in an image processing device to execute image processing of executing movement prediction of a moving subject included in an input image from an imaging unit, generating a future prediction image, and displaying the image on a display unit.
